# EUROPEAN PATENT APPLICATION

(11) **EP 1 935 550 A1**
(43) Date of publication of application: **25.06.2008**
(21) Application number: 07020924.2
(22) Date of filing: 25.10.2007
(51) Int. Cl.: B23K 11/31

(54) **Driving unit of a welding gun**

(30) Priority: 22.12.2006 JP 2006345169
(71) Applicant: Obara Corporation, Ayase-shi Kanagawa-ken 252-1104 (JP)
(72) Inventor: Sato, Yoshio, Ayase-shi Kanagawa-ken 252-1104 (JP)
(74) Representative: Goddar, Heinz J.

(57) **Abstract**

The invention provides a driving unit of welding equipment capable of steadily implementing rotation-stop of a pressure application shaft (9) without enlarging the diameter of a hole of a rotary shaft (5) of the motor (1) while the entire length of the welding equipment is shortened and an entire gun is rendered downsized, lightweight and compact. The driving unit of welding equipment provided with the pressure application shaft (9) that is driven by the motor (1) and has a portion to be pulled in the motor (1), wherein the rotary shaft (5) of the motor (1) is formed of a hollow shaft, a screw shaft (7) is fixed to the rotary shaft (5) and the pressure application shaft (9) is provided with a nut (10) to be screwed with the screw shaft (7), characterized in that the pressure application shaft (9) has a notched face (12) at one side or notched faces (12) at both sides thereof in cross section in the direction at right angles to a shaft center thereof, wherein the notched face (12) or notched faces (12) serve as a rotation-stop mechanism and a part or whole of the counterpart bearing (13) of the pressure application shaft (9) is housed in the rotary shaft (5).

## Description

### FIELD OF THE INVENTION

The invention relates to welding equipment provided with a pressure application shaft that is driven by a motor and has a portion to be pulled in the motor, particularly to a driving unit of the welding equipment wherein a rotary shaft of the motor is formed of a hollow shaft, a screw shaft is fixed to the rotary shaft and the pressure application shaft is provided with a nut to be screwed with the screw shaft.

### BACKGROUND OF THE INVENTION

There has been conventionally such a driving unit of welding equipment, for example, as disclosed in JP 2001-293577A.

Meanwhile, in the conventional driving unit of welding equipment, a stop-rotation mechanism of the pressure application shaft integrally provided with a nut is disposed at the nut side, and the stop-rotation mechanism employs a spline mechanism and a linear motion guide mechanism, causing the diameter of a hole of the motor to be large, so that an inertia moment of the rotary shaft becomes large and an instantaneous force of the motor generated when following up the formation of nugget becomes small, thereby deteriorating performance as the welding equipment. Further, since a sectional area of the hollow motor becomes large, the entire size of a gun becomes large, which could lead to the problem of being contrary to the market needs of a lightweight and compact gun.

### SUMMARY OF THE INVENTION

The invention has been developed in view of the problem of the conventional technique, and it is an object of the invention to provide a driving unit of welding equipment capable of steadily implementing rotation-stop of a pressure application shaft without enlarging the diameter of a hole of the rotary shaft of the motor while the entire length of the welding equipment is shortened and an entire gun is rendered downsized, lightweight and compact.

To achieve the above object, the driving unit of welding equipment of the first aspect of the invention provided with a pressure application shaft that is driven by a motor and has a portion to be pulled in the motor, wherein a rotary shaft of the motor is formed of a hollow shaft, a screw shaft is fixed to the rotary shaft and the pressure application shaft is provided with a nut to be screwed with the screw shaft, characterized in that the pressure application shaft has a notched face at one side or notched faces at both sides thereof in cross section in the direction at right angles to a shaft center of thereof, and wherein the notched face or notched faces serve as a whirl-stop or rotation-stop mechanism and a part or whole of a counterpart bearing of the pressure application shaft is housed in the rotary shaft.

Further, according to the driving unit of welding equipment of the second aspect of the invention, the nut may have a notched face at one side or notched faces at both sides thereof in cross section in the direction at right angles to the shaft center of the pressure application shaft.

With the configuration of the first aspect of the invention, there are obtained the effects that rotation-stop of the pressure application shaft can be implemented steadily without enlarging the diameter of a hole of the rotary shaft of the motor while the entire length of the welding equipment is shortened and an entire gun is rendered downsized, lightweight and compact.

With the configuration of the second aspect of the invention, there obtained the effects that rotation-stop of the pressure application can be implemented further steadily without affecting on the diameter of the hole of the rotary shaft of the motor and the stroke of the gun can be increased.

### BRIEF DESCRIPTION OF THE DRAWINGS

Fig. 1 is a longitudinal sectional view of a driving unit of welding equipment according to an embodiment of the invention;
Fig. 2 is a front view of the driving unit of welding equipment in Fig. 1;
Fig. 3 is a longitudinal sectional view of a pressure application shaft and a nut according to another embodiment of the invention; and
Fig. 4 is a front view of the pressure application shaft and the nut shown in Fig. 3.

### PREFERRED EMBODIMENT OF THE INVENTION

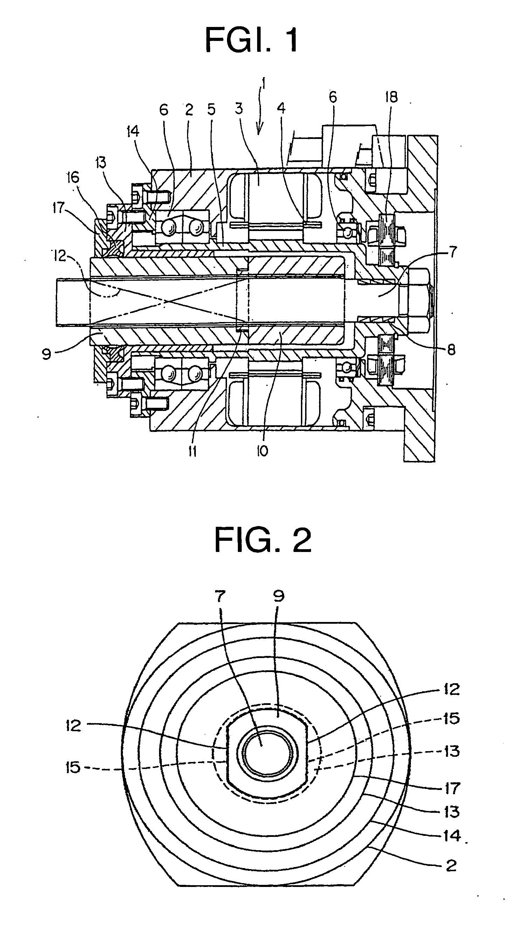

A first embodiment of the invention is described with reference to Fig. 1 and Fig. 2.

In the figures, depicted by 1 is a servomotor, and the servomotor 1 comprises a stator winding 3 fixed to an outer shell 2 thereof, a rotor magnetic pole 4 disposed on the inner periphery of the stator winding 3 and a rotary shaft 5 to which the rotor magnetic pole 4 is fixed, wherein the rotary shaft 5 is formed of a hollow shaft and journalled to the outer shell 2 of the servomotor 1 by bearings 6, 6. Further, a ball screw shaft 7 positioned at the shaft center portion of the servomotor 1 is fixed to the rotary shaft 5 by a fixing means 8 such as a wedge.

Depicted by 9 is a pressure application shaft, and a ball nut 10 provided with a screw that engages indirectly with a screw of the ball screw shaft 7 via a ball is fixed to the rear side of the pressure application shaft 9 at a screwing portion 11 by screwing, and the ball nut 10 has substantially the same diameter as that of the pressure application shaft 9. The front portion of the pressure application shaft 9 can protrude from the servomotor 1 and there are connecting at the front end thereof electrodes (not shown) for applying a pressure to a workpiece to implement welding in a C-type gun, a connection member (not shown) for connecting to a gun arm in an X-type gun, and a table (not shown) for placing a workpiece thereon in a welding jig, and so forth. In the case where the ball screw shaft 7 is formed of a normal screw shaft, it may engage with the ball nut 10 as a normal nut and the pressure application shaft 9 and the ball nut 10 may be configured to be integrally formed without integrating them by a screwing means.

An outer diameter of the pressure application shaft 9 is smaller than an inner diameter of the rotary shaft 5, and notched faces 12, 12 (shown as an imaginary line in Fig. 1) are formed on the pressure application shaft 9 at both sides thereof in cross section in the direction at right angles to the shaft center of the pressure application shaft 9 and the notched faces 12, 12 serve as a rotation-stop mechanism of the pressure application shaft 9. The notched face 12 may be formed on one side of the pressure application shaft 9, and the notched faces may be provided on the outer periphery of the ball nut 10 in the same way as the pressure application shaft 9.

Depicted by 13 is a bearing fixed to a front wall 14 of the servomotor 1, and it is extended from the rotary shaft 5 and housed therein and it serves as a counterpart bearing of the pressure application shaft 9. The bearing 13 has flat faces 15, 15 on its inner surface at the portion confronting the notched faces 12, 12 of the pressure application shaft 9, and the flat faces 15, 15 serve as a radial bearing to implement rotation-stop operation of the pressure application shaft 9. A part of the bearing 13 may protrude toward the front of the rotary shaft 5.

Depicted by 16 is a dust seal, 17 is a front cover of the dust seal 16, and 18 is a position detector.

With the driving unit of welding equipment having the configuration as set forth above, in a state shown in Fig. 1, the pressure application shaft 9 is pulled fully in the rotary shaft 5. In order to cause the pressure application shaft 9 to protrude from the interior of the servomotor 1 to implement the pressure application operation, the stator winding 3 of the servomotor 1 is supplied with, for example, a three-phase current, causing the communication line 4 to be energized to rotate the rotary shaft 5, so that the ball screw shaft 7 fixed to the rotary shaft 5 starts rotation and the ball nut 10 moves along the ball screw shaft 7 as the ball screw shaft 7 rotates. As a result, the pressure application shaft 9 integrated with the ball nut 10 is guided by the bearing 13 to move along the inner peripheral surface of the rotary shaft 5, so that the pressure application shaft 9 is protruded sequentially outside the servomotor 1, thereby implementing the pressure application operation while the amount of protrusion increases.

When the pressure application shaft 9 moves while guided by the bearing 13, the bearing 13 implements a steady stop-rotation operation relative to the pressure application shaft 9 and ball nut 10 while the notched faces 12, 12 provided on the pressure application shaft 9 opposite to the flat faces 15, 15 provided on the bearing 13 implements slip operation.

Since the rotation-stop mechanism of the pressure application shaft 9 is positioned inside the rotary shaft 5 as the notched faces 12, 12 of the pressure application shaft 9, in the manner described above, thereby removing the main cause of the prior art to increase the diameter of the hole of the hollow rotary shaft 5, thereby achieving the driving unit of welding equipment capable of steadily implementing rotation-stop of the pressure application shaft without enlarging the diameter of a hole of the rotary shaft of the motor while the entire length of the welding equipment is shortened and an entire gun is rendered downsized, lightweight and compact.

Although the servomotor is employed as the motor in the first embodiment, there may be employed an appropriate motor such as a stepping motor, an inverter motor, a reluctance motor and so forth.

According to a second embodiment of the driving unit of welding equipment of the invention, a pressure application shaft 9 and a nut 10 are formed integrally, and a rotation-stop mechanism is also provided on the nut 10, and the other components of the second embodiment are the same as those of the first embodiment, and hence the description thereof is omitted.

The nut 10 is formed integrally with the rear side of the pressure application shaft 9 and a screw 30 that is screwed with a screw shaft (not shown) is formed on the nut 10.

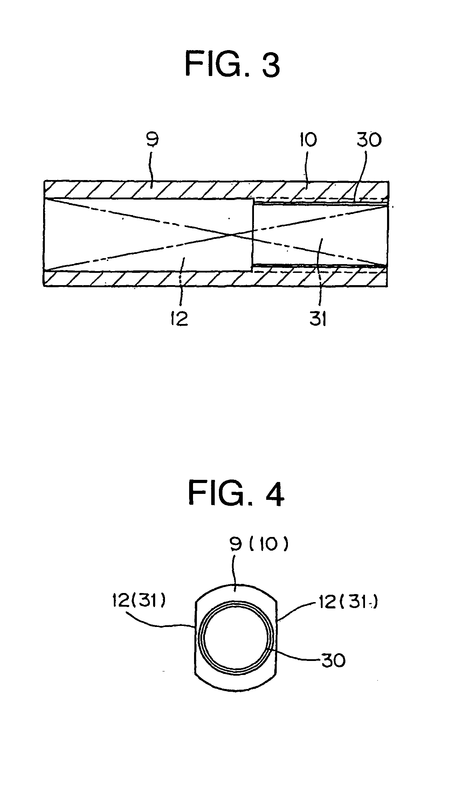

With the configuration of the second embodiment, notched faces 12, 12 (shown by an imaginary line in Fig. 3) are formed on the pressure application shaft 9 at both sides or one side in cross section in the direction at right angles to the shaft center of the pressure application shaft 9, and also similar notched faces 31, 31 (shown by an imaginary line in Fig. 3) are formed on the outer peripheral surface of the nut 10 at both sides or one side in cross section in the direction at right angles to the shaft center of the pressure application shaft 9, and the notched face 31 also serves as a rotation-stop mechanism of the pressure application shaft 9.

With the configuration of the second embodiment of the invention, the rotation mechanism at the nut 10 side also removes the main cause to enlarge the diameter of the hole of the hollow rotary shaft, and there are obtained the effect that rotation-stop of the pressure application shaft can be implemented steadily while cooperating with the pressure application shaft without enlarging the diameter of the hole of the rotary shaft of the motor and the stroke of the gun can be increased while the entire length of the welding equipment is shortened and an entire gun is rendered downsized, lightweight and compact.

Further, with configuration of the second embodiment of the invention, provided that the nut 10 is formed of a ball nut, return portions of the ball (upper and lower portions of the nut 10 in Fig. 4) are positioned at portions other than the notched faces at 90 degrees in phase difference relative to the notched faces of the nut, and the return portions become symmetrical with the center of the pressure application shaft 9 so that there is an effect that a load applied to each ball becomes uniform to lengthen the life of the ball screw shaft.

## Claims

1. A driving unit of welding equipment provided with a pressure application shaft (9) that is driven by a motor (1) and has a portion to be pulled in the motor (1), wherein a rotary shaft (5) of the motor (1) is formed of a hollow shaft, a screw shaft (7) is fixed to the rotary shaft (5) and the pressure application shaft (9) is provided with a nut (10) to be screwed with the screw shaft (7), **characterized in that** the pressure application shaft (9) has a notched face (12) at one side or notched faces (12) at both sides thereof in cross section in the direction at right angles to a shaft center thereof, wherein the notched face (12) or notched faces (12) serve as a rotation-stop mechanism and a part or whole of the counterpart bearing (13) of the pressure application shaft (9) is housed in the rotary shaft (5).

2. The driving unit of welding equipment according to Claim 1, wherein the nut (10) may have a notched face (31) at one side or notched faces (31) at both sides thereof in cross section in the direction at right angles to the shaft center of the pressure application shaft (9).
